(19) Europäisches Patentamt
European Patent Office
Office européen des brevets

(11) Numéro de publication: **0 420 772 A1**

# (12) DEMANDE DE BREVET EUROPEEN

(21) Numéro de dépôt: **90420417.9**

(22) Date de dépôt: **21.09.90**

(51) Int. Cl.5: **C08J 5/04**, B29B 15/10, B32B 5/26

(30) Priorité: **25.09.89 FR 8912725**

(43) Date de publication de la demande: **03.04.91 Bulletin 91/14**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Bartlet, Philippe**
**39, rue Clément-Michut**
**F-69100 Villeurbanne(FR)**
Inventeur: **Feigenbutz, Gerald**
**Arlesheimerstrasse 37**
**W7800 Freiburg(DE)**

(74) Mandataire: **Trolliet, Maurice et al**
**RHONE-POULENC CHIMIE Service Brevets**
**Chimie Centre de Recherches des Carrières**
**B.P. 62**
**F-69192 Saint-Fons Cédex(FR)**

## (54) Article textile plat constitué d'un support souple et d'une couche de polymère appliquée sur ledit support et liée à ce dernier et son procédé de préparation.

(57) L'invention concerne un article textile plat, utilisé comme produit intermédiaire, pour fabriquer des corps moulés avec mise en oeuvre de chaleur et de pression.

Conformément à l'invention, l'article textile plat, qui est constitué d'un support souple et plat, par exemple, d'un tissu de filés de fibres de verre servant à renforcer les corps moulés, et d'une couche de polymère déposée sur le support et liée à celui-ci, présente les caractéristiques suivantes :
le polymère utilisé, par exemple un polymère thermotrope, est filable et se présente sous la forme de fibres et/ou de filaments ayant un diamètre de 0,5 à 30 μm ; lesdits fibres et/ou filaments sont obtenus selon la technique de filage par soufflage de polymère fondu, à l'aide d'une tête de filage, et extrudés directement sur le support, la distance minimale entre la sortie du polymère du canal ou des canaux de filière et le support étant de 10 mm ; la couche de fibres et/ou de filaments de polymère est liée au support, l'effort de séparation étant au moins égal à 3 cN/cm.

L'article plat selon l'invention peut être transformé en différents corps moulés, par exemple en pare-chocs pour la construction automobile.



Xerox Copy Centre

# ARTICLE TEXTILE PLAT CONSTITUE D'UN SUPPORT SOUPLE ET D'UNE COUCHE DE POLYMERE APPLIQUEE SUR LEDIT SUPPORT ET LIEE A CE DERNIER ET SON PROCEDE DE PREPARATION

La présente invention concerne un article textile plat qui sert de produit intermédiaire pour fabriquer des corps moulés mettant en oeuvre la chaleur et la pression, ledit article plat étant constitué d' :
- un support textile souple et plat servant à renforcer le corps moulé, ainsi que d' :
- une couche de polymère appliquée sur le support et liée à ce dernier. Elle concerne également un procédé de préparation dudit article textile plat.

Par article plat, on entend que celui-ci présente au moins une de ses trois dimensions qui est beaucoup plus petite que l'une des deux autres.

On trouve une description des articles textiles plats du type précité, par exemple, dans la revue "Chemiefasern-Textilindustrie (Industrie-Textilien)", 39/91ème année, juillet/août 1989, pages T 188 et T 189.

Lesdits articles textiles plats connus présentent, toutefois, les inconvénients suivants :
- pour appliquer la couche de polymère sur le support, on commence généralement par dissoudre le polymère dans un solvant et, ensuite, on imprègne le support de ladite solution de polymère. Cependant, pour maintes raisons, il n'est pas recommandé d'utiliser des solvants (par exemple en raison de leur toxicité, de leur action sur l'environnement, de leur récupération, etc.),
- la mise en forme (moulage) des articles plats connus en recourant à la chaleur et à la pression, par exemple par emboutissage dans un outil de formage chauffé nécessite relativement beaucoup de temps et, par conséquent, une puissance énergétique (thermique) relativement élevée.

La présente invention repose sur le problème suivant, à savoir mettre à la disposition de l'homme de métier un article textile plat du type décrit ci-dessus :
- dont la fabrication ne demande pas d'utiliser des solvants pour appliquer la couche de polymère sur le support, et
- dont le moulage, avec mise en oeuvre de chaleur et de pression, exige très peu de temps.

Ce problème est résolu par la présente invention qui, de manière plus précise, concerne un article textile plat, servant de produit intermédiaire, pour fabriquer des corps moulés avec mise en oeuvre de chaleur et de pression, ledit article plat étant constitué d' :
- un support textile souple et plat, servant de renforcement pour les corps moulés,
ainsi que d' :
- une couche de polymère appliquée sur ledit support et liée à celui-ci, et étant caractérisé en ce que :
- le polymère est un polymère filable,
- le polymère se présente sous la forme de fibres et/ou de filaments ayant un diamètre de 0,5 à 30 $\mu$m,
- les fibres et/ou les filaments sont obtenus par filage-soufflage du polymère filable fondu, à l'aide d'une tête de filage comportant un ou plusieurs canaux de filière, et sont extrudés directement sur le support, la distance entre la sortie du polymère du canal ou des canaux de filière et le support étant au moins égale à 10 mm, et
- la couche de fibres et/ou de filaments polymères est liée au support, l'effort de séparation mesuré d'après la norme DIN 54310 étant au moins égal à 3 cN/cm.

La présente invention offre les avantages suivants :
- au cours de la fabrication de l'article textile plat selon l'invention, on renonce, pour appliquer la couche de polymère sur le support, à utiliser des solvants,
- la transformation de l'article textile plat selon l'invention en corps moulés ne nécessite que des temps courts et, en conséquence, qu'une faible puissance en énergie thermique,
- l'article plat selon l'invention est souple, pliable, enroulable et, par conséquent, facile à manipuler,
- par rapport à la fabrication de l'article plat connu au cours de laquelle le support est imprégné d'une solution de polymère, la fabrication de l'article plat selon l'invention entraîne la suppression du temps d'évaporation du solvant d'imprégnation, étant donné que selon la présente invention on obtient pratiquement immédiatement une matière polymère à l'état solide (sous forme de fibres et/ou de filaments) au moment où celle-ci arrive sur le support,
- contrairement à l'article plat connu au cours de la fabrication duquel le support est imprégné d'une solution de polymère, on peut, selon l'invention,

a) choisir à volonté le rapport pondéral de la couche de polymère au support (on peut donc appliquer sur le support autant de polymère que l'on veut), et

b) répartir différemment la masse du polymère sur le support et obtenir ainsi, à partir de l'article plat selon l'invention, un corps moulé ayant différentes épaisseurs de parois.

L'article textile plat selon la présente invention est préparé par un procédé comprenant les étapes suivantes :

- on produit des fibres et/ou des filaments en utilisant la technique de filage par soufflage d'un polymère filable fondu, à l'aide d'une tête de filage comportant un ou plusieurs canaux de filière,
- et on les extrude directement sur un support textile souple et plat en veillant à ce que la distance entre la sortie du polymère du canal ou des canaux de filière et le support soit au moins égale à 10 mm, pour obtenir une couche de fibres et/ou de filaments qui est liée au support avec un effort de séparation mesuré selon la norme DIN 54310 au moins égal à 3 CN/cm.

Les méthodes de fabrication de fibres et/ou de filaments selon la technique de filage par soufflage d'un polymère filable fondu sont décrites entre autres dans les demandes de brevets allemands DE-A-1.900.265 et DE-A-1.964.060 et dans l'article "Development And Commercialization of the Melt Blowing Process For Manufacture of Fine Fibered Webs" publié dans "Formed Fabics Industry", décembre 1974, pages 39 à 50.

L'une de ces têtes de filage utilisées dans ces méthodes de fabrication de fibres et/ou de filaments selon la technique de filage par soufflage d'un polymère filable fondu est décrite par exemple dans le brevet allemand DE-A-2.550.463.

Aux fins de la présente invention, on peut mettre en oeuvre comme polymères filables tous les polymères que l'on peut filer à l'état fondu ; conviennent notamment : les polyamides entièrement aliphatiques comme par exemple le nylon 6, le nylon 6,6 ou le nylon 6,10 ; le polyamides alkylaromatiques (ou polyamides semi-aromatiques) comme par exemple les copolymères obtenus à partir d'acide(s) isophtalique et/ou téréphtalique et d'hexaméthylènediamine ou d'alkylpentaméthylènediamine ; les polyesters alkylaromatiques du type polytéréphtalate d'alkylène comme par exemple le polytéréphtalate d'éthylèneglycol ou le polytéréphtalate de butanediol-1,4 ; les polyoléfines comme par exemple les polyéthylènes hautes et basses densités, le polypropylène, les copolymères éthylène-propylène ; les polymères thermotropes comprenant dans leur structure des enchaînements polyester comme par exemple des polyesters totalement aromatiques thermotropes, des polyesters alkylaromatiques thermotropes, des polyesteramides totalement aromatiques thermotropes, des polyesteramides alkylaromatiques thermotropes, des polyesters carbonates aromatiques, et des mélanges de ces polymères.

Lorsque l'article textile plat selon l'invention doit être transformé en corps moulés destinés notamment à l'industrie automobile, par exemple en pare-chocs, on met en oeuvre comme polymère filable, de préférence, un polymère thermotrope comprenant dans sa structure des enchaînements polyester.

L'emploi de polymères thermotropes aux fins de l'invention est une mesure préférée car on peut obtenir, après transformation de l'article textile plat, et du fait de la structure orientée de sa partie polymère thermotrope, des corps moulés possédant des caractéristiques mécaniques qui sont améliorées par rapport à ce que l'on obtient à partir d'un article textile plat issu d'un polymère non thermotrope. Dans ce contexte, il convient de noter que les polymères thermotropes se prêtent en général difficilement aux méthodes antérieurement connues de préparation d'un article textile plat consistant notamment, outre la technique d'une imprégnation d'un support par voie solvant déjà citée (les solvants utilisables avec les polymères thermotropes sont difficiles à manipuler), dans la calandrage de films de polymère sur le support (les polymères thermotropes présentent une anisotropie de propriétés qui peut être préjudiciable à cette technique) ou dans la projection électrostatique du polymère en poudre sur le support, suivie de la fusion du polymère et d'une compression de l'ensemble (les polymères thermotropes du fait de leur structure orientée ne sont pas habituellement disponibles sous forme de poudre).

Selon une modalité plus préférentielle de mise en oeuvre de la présente invention, les polymères thermotropes auxquels on fait appel sont les polyesters totalement aromatiques, les polyesteramides totalement aromatiques et les mélanges de ces polymères.

Des polyesters totalement aromatiques qui sont thermotropes, c'est-à-dire qui sont capables de former des masses fondues anisotropes sont décrits par exemple : dans les brevets américains US-A-3.991.013, 3.991.014, 4.066.620, 4.075.262, 4.118.372, 4.130.545, 4.161.470, 4.181.792, 4.188.476, 4.219.461, 4.224.433, 4.230.817, 4.346.208 dans la demande de brevet européen EP-A-0.191.705 ; et dans la demande de brevet français FR-A-2.617.851 ; la substance de ces brevets ou demandes de brevets est incorporée ici en référence.

Des polyesteramides totalement aromatiques qui sont thermotropes sont décrits par exemple : dans les brevets américains US-A-4.272.625, 4.330.457, 4.339.375, 4.355.132 dans la demande de brevet européen EP-A-0.272.992 ; et dans les demandes de brevets français FR-A-2.617.851, 2.617.852 et 2.617.853 ; la substance de ces brevets ou demandes de brevets est incorporée ici aussi en référence.

Les polymères thermotropes qui sont choisis pour la mise en oeuvre de la présente invention sont ceux, appartenant aux familles générales ou préférées précitées, qui possèdent une température d'écoulement se situant dans l'intervalle allant de 200 °C à 350 °C et, de préférence, allant de 260 °C à 330 °C et

qui présentent une viscosité inhérente au moins égale à 0,5 $dlg^{-1}$ et se situant préférentiellement dans l'intervalle allant de 1,0 à 4,0 $dlg^{-1}$. On entend par "température d'écoulement", la température à laquelle les bords d'un échantillon sous forme de copeau de polymère ou de fibre coupée commencent à s'arrondir ; cette température est déterminée par observation visuelle de l'échantillon sur une lamelle couvre-objet pour une vitesse de montée en température appropriée généralement de l'ordre de 10° C à 20° C par minute, observation faite à l'aide d'un microscope équipé d'une platine chauffante connu dans le commerce sous la marque THERMOPAN. A propos de la viscosité inhérente, on précisera qu'elle est mesurée à 25° C sur une solution renfermant 0,5 g de polymère pour 100 $cm^3$ d'un mélange solvant parachlorophénol/dichloro-1,2 éthane (50/50 en volume).

Des polyesters et des polyesteramides totalement aromatiques thermotropes qui sont tout spécialement préférés pour la mise en oeuvre de la présente invention sont ceux décrits dans les demandes de brevets européens EP-A-0.191.705 et 0.272.992. Ces polyesters et polyesteramides présentent les particularités suivantes :

- ils comprennent des unités de récurrence de formule (I), (II), (III) et (IV), la présence des unités (II) étant facultative :

(I) désignant la stucture :

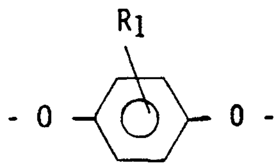

dans laquelle

$R_1$ représente un radical méthyle ou éthyle ou un atome de chlore ou de brome, les unités (I) pouvant être identiques ou différentes entre elles,

(II) désignant la structure :

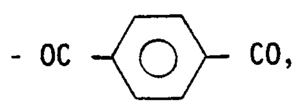

(III) désignant la structure :

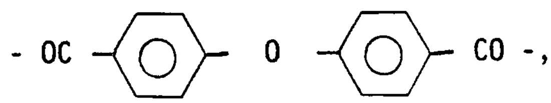

(IV) désignant la structure :

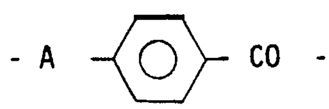

dans laquelle le symbole A représente un atome d'oxygène ou le groupement NH ;

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;
- la quantité des unités (IV), exprimée par rapport à la quantité des unités (I), se situe dans l'intervalle allant, dans le cas où A = 0, de 10 à 300 % en mole et, dans le cas où A = NH, de 5 à 100 % en mole.

Selon une modalité encore plus spécialement préférentielle, les polyesters et polyesteramides totalement aromatiques thermotropes utilisables dans la présente invention présentent une structure telle que celle définie ci-avant dans laquelle :

- la quantité des unités (II) dans le mélange (II) + (III) se situe dans l'intervalle allant de 20 à 60 % en mole

et celle des unités (III), par rapport à la même référence, va de 80 à 40 % en mole,

- et la quantité des unités (IV), exprimée par rapport à la quantité des unités (I), se situe dans l'intervalle allant, dans le cas où A = 0, de 30 à 200 % en mole et, dans le cas où A = NH, de 10 à 60 % en mole.

Parmi les polyesters et les polyesteramides aromatiques correspondant à cette modalité encore plus spécialement préférentielle, ceux qui conviennent bien sont les polymères présentant une structure dans laquelle les unités (I) sont identiques, avec le substituant $R_1$ représentant un radical méthyle ou un atome de chlore.

Les polyesters et polyesteramides totalement aromatiques thermotropes tout spécialement préférés dont on vient de parler englobent aussi les polymères qui peuvent contenir en outre dans leur structure des unités aromatiques génératrices de fonctions esters et amides (unités dioxy et/ou unités dicarbonyle et/ou unités mixtes oxy/carbonyle ou amino-secondaire/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

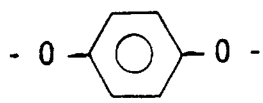

(I')

et/ou

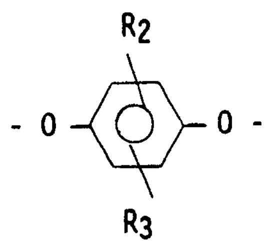

(I") où $R_2$ et $R_3$, qui peuvent être identiques ou différents, ont chacun la définition donnée ci-avant pour $R_1$, les unités (I") pouvant être identiques ou différentes entre elles,

et/ou

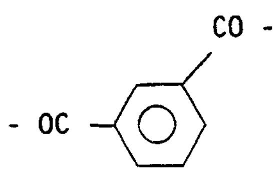

(II')

et/ou

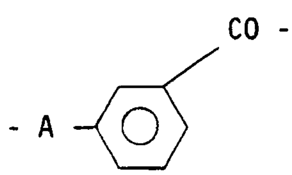

(IV') où le symbole A a la signification donnée ci-avant à propos des unités (IV).

Un autre type de polyesters et polyesteramides totalement aromatiques thermotropes qui sont aussi tout spécialement préférés pour la mise en oeuvre de la présente invention consiste dans les polymères décrits dans les brevets américains US-A-4.161.470 et 4.330.457 qui présentent les particularités suivantes :

. S'agissant des polyesters :

- ils comprennent des unités de récurrence de formule (V) et (VI) :

(V) désignant la structure :

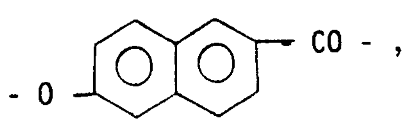

(VI) désignant la structure :

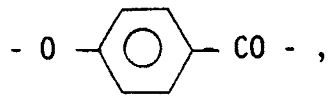

- la quantité des unités (V) dans le mélange (V) + (VI) se situe dans l'intervalle allant de 10 à 90 % en mole et celle des unités (VI), par rapport à la même référence, se situe dans l'intervalle allant de 90 à 10 % en mole ;

. S'agissant des polyesteramides :

- ils comprennent des unités de récurrence de formules (VII), (VIII) et (IX) :

(VII) désignant la structure :

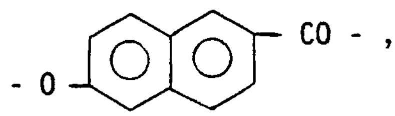

(VIII) désignant la structure :

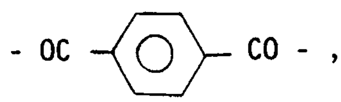

(IX) désignant la structure :

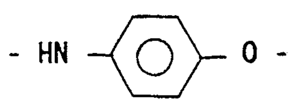 ou 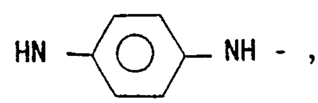

- la quantité des unités (VII) dans le mélange (VII) + (VIII) + (IX) se situe dans l'intervalle allant de 10 à 90 % en mole, celle des unités (VIII), par rapport à la même référence, se situe dans l'intervalle allant de 5 à 45 % en mole et celle des unités (IX), par rapport à la même référence, se situe dans l'intervalle allant de 5 à 45 % en mole.

Parmi les polyesters et les polyesteramides totalement aromatiques appartenant à cet autre groupe de polymères tout spécialement préférés, ceux qui conviennent bien sont les polymères mis dans le commerce par la Société CELANESE, sous la marque déposée VECTRA, de type A 900 (polyester) ou B 900 (polyesteramide).

Selon l'invention, le support textile souple et plat peut être constitué de tissu, de tricot ou de non tissé. Par exemple, on peut mettre en oeuvre comme support, selon l'invention :

- un tissu de fils à base de filaments de verre et/ou de filés à base de fibres de polyamide totalement aromatique ou de poly(imide-amide),
- un tricot de filés à base de fibres de polyester et/ou de fils à base de filaments de polyester, ou
- un non tissé de fibres et/ou de filaments de polyamide et/ou de polyester.

L'article plat selon l'invention peut, avec mise en oeuvre de chaleur et de pression, être transformé en différents corps moulés, par exemple, en

- matériaux réticulés (matériaux composites renforcés de fibres en forme de treillis) avec arrangement spatial, destinés en particulier à la construction légère dans les domaines de l'automobile, de l'aéronautique et du bâtiment ;
- pare-chocs et éléments de carrosserie pour la construction automobile.

L'article textile plat selon l'invention peut être transformé individuellement en corps moulé avec mise en oeuvre de chaleur et de pression. Mais il est possible également, lorsque l'on souhaite ou qu'il est indispensable d'obtenir un degré de renforcement plus important du corps moulé (par l'intermédiaire du support), de superposer ou d'empiler les uns sur les autres plusieurs articles plats selon l'invention et de

les soumettre à la mise en forme.

L'exemple suivant, donné à titre non limitatif, va permettre d'illustrer plus précisément l'invention.

EXEMPLE 1 :

1. Description du polymère thermotrope utilisé

On prépare un copolyester totalement aromatique du type de celui décrit dans la demande de brevet européen EP-A-0.191.705.

Dans un réacteur de polycondensation de 7,5 litres agitée et chauffé par un fluide caloporteur circulant dans la double enveloppe du réacteur, muni d'un dispositif de distillation et de balayage par un gaz inerte, on introduit les réactifs suivants :

(1) diacétate de méthylhydroquinone : 1456 g
rapport molaire (1)/(2) + (3) = 1
(2) acide téréphtalique : 581 g
50 % en mole dans mélange (2) + (3)
(3) dicarboxy-4,4′ diphényléther : 903 g
50 % en mole dans mélange (2) + (3)
(4) acide para-acétoxybenzoïque : 756 g
60 % en mole par rapport à (1).

Le réacteur est purgé à l'azote, puis chauffé par le fluide caloporteur réglé à 260 °C pendant 2 heures et 20 minutes. Le volume d'acide acétique distillé est de 890 $cm^3$ (soit 85 % de la théorie). On élève ensuite progressivement la température du fluide caloporteur jusqu'à 300 °C en 60 minutes, en diminuant dans le même temps la pression de $1010.10^2$ Pa à $0,39.10^2$ Pa. Après que la distillation d'acide acétique se soit arrêtée, on maintient encore la température de 300 °C et la pression de $0,39.10^2$ pendant 39 minutes. Le volume total d'acide acétique recueilli est de 1040 $cm^3$ (soit 100 % de la théorie).

Le polymère obtenu est grisâtre et d'aspect fibreux. Il possède une viscosité inhérente de 2,07 $dlg^{-1}$. La température d'écoulement est de 290 °C. La plage d'anisotropie va de 290 °C jusqu'à plus de 350 °C.

2. Réalisation d'un article selon l'invention :

On fait fondre à 300 °C le copolyester thermotrope obtenu et on le transforme, selon le procédé de filage par soufflage de matière fondue, en fibres et filaments de diamètre moyen compris entre 5 et 6 µm à l'aide d'une tête de filage analogue à celle décrite dans le brevet DE-A-2.550.463. La tête de filage comporte un canal de filière rond et le filage se fait vers le bas, à la verticale. Le diamètre du canal de filière est égal à 0,4 mm ; les conditions de marche de la tête de filage sont les suivantes : température matière : 330 °C, et débit matière : 0,18 kg/h.

Le support utilisé est constitué d'un tissu souple et plat de fils à base de filaments de verre ; ce tissu est du type sergé, il présente un grammage de 50 $g/m^2$, il est mis dans le commerce par la Société Porcher sous la référence 108, et il a subi un traitement par du gamma-aminopropyltriéthoxysilane (silane A 1100 d'Union Carbide). Ledit support est placé sur une table à coordonnées sous la tête de filage ; le support long de 700 mm et large également de 700 mm est disposé perpendiculairement à l'axe de filage, la distance entre la sortie du polymère du canal de filière et le support étant de 10 mm. A cette distance de 10 mm, la tête de filage forme sur le support une "tache" ronde, c'est-à-dire un amoncellement rond de fibres et de filaments ayant un diamètre de 15 mm. Afin de recouvrir complètement le support de fibres et de filaments, on déplace la table à coordonnées à la vitesse correspondante selon l'axe des x et des y. On dépose ainsi sur le support une masse de fibres et de filaments de 160 $g/m^2$.

Cette masse de fibres et de filaments est solidement liée au support, l'effort de séparation étant, en effet, de 5 cN/cm d'après la norme DIN 54310.

L'article plat ainsi obtenu, constitué d' :

- un support ayant la forme d'un tissu souple et plat de fils à base de filaments de verre et d' :
- une couche , ayant une épaisseur de 1,3 mm, de fibres et de filaments de 5-6 µm de diamètre, déposée sur ledit support et liée solidement à ce dernier,

est souple, pliable et enroulable.

Ledit article plat est ensuite découpé en 12 carrés (15 x 15 cm) que l'on empile dans un moule et on

place l'ensemble dans une étuve, sous atmosphère inerte, chauffée à 300° C pendant 30 minutes. Au bout de ce temps, on place immédiatement le moule avec son empilement, qui a été préchauffé, entre les plateaux d'une presse dans les conditions suivantes :
- température des plateaux de la presse : 100° C,
- pression : $35.10^{5}$ Pa,
- durée de pressage : 1 minute 30 secondes.

On procède ensuite, sur la pièce stratifiée obtenue comportant 30 % en poids de tissu de verre, aux mesures des caractéristiques suivantes :
- masse volumique : 1,65 g/$cm^3$ (selon la norme NF T 51063) ;
- caractéristiques en flexion (selon la norme NF T 51001) :
. résistance en flexion : 250 MPa,
. module en flexion : 16000 Mpa ;
- caractéristiques en traction (selon la norme NF T 51034) :
. résistance en traction : 160 MPa,
. module en traction : 13000 MPa ;
- température de fléchissement sous charge de 1,82 MPa (selon la norme NF T 51005) : 275° C.

EXEMPLE 2 :

On fait fondre le polypropylène qui possède : un indice de viscosité à l'état fondu (melt index) mesuré à 230° C sous une charge de 2,16 kg de 35 g/10 mn, une masse volumique à 23° C de 0,902 g/$cm^3$ et un domaine de fusion de 165° C à 170° C, et on transforme ce polypropylène fondu, selon le procédé de filage par soufflage de matière fondue, en fibres et en filaments de diamètre moyen compris entre 2 et 3 $\mu$m à l'aide d'une tête de filage analogue à celle décrite dans le brevet De-A-2.550.463. La tête de filage comporte un canal de filière rond et le filage se fait vers le bas, à la verticale. Le diamètre du canal de filière est égal à 0,4 mm ; les conditions de marche de la tête de filage sont les suivantes : température matière : 330° C, et débit matière : 0,15 kg/h.

Le support utilisé est constitué d'un tissu souple et plat de fils à base de filaments de verre ; ce tissu est du type sergé, il présente un grammage de 50 g/$m^2$, il est mis dans le commerce par la Société Porcher sous la référence 108, et il a subi un traitement par du gamma-aminopropyltriéthoxysilane (silane A 1100 d'Union Carbide). Ledit support est placé sur une table à coordonnées sous la tête de filage ; le support long de 700 mm et large également de 700 mm est disposé perpendiculairement à l'axe de filage, la distance entre la sortie du polymère du canal de filière et le support étant de 180 mm. A cette distance de 180 mm, la tête de filage forme sur le support une "tache" ronde, c'est-à-dire un amoncellement rond de fibres et de filaments ayant un diamètre de 30 mm. Afin de recouvrir complètement le support de fibres et de filaments, on déplace la table à coordonnées à la vitesse correspondante selon l'axe des x et des y. On dépose ainsi sur le support une masse de fibres et de filaments de 160 g/$m^2$.

Cette masse de fibres et de filaments est solidement liée au support, l'effort de séparation étant, en effet, de 5 cN/cm d'après la norme DIN 54310.

L'article plat ainsi obtenu, constitué d' :
- un support ayant la forme d'un tissu souple et plat de fils à base de filaments de verre et d' :
- une couche, ayant une épaisseur de 1,6 mm, de fibres et de filaments de 2-3 $\mu$m de diamètre, déposée sur ledit support et liée solidement à ce dernier,

est souple, pliable et enroulable.

**Revendications**

1/ Article textile plat, servant de produit intermédiaire, pour fabriquer des corps moulés avec mise en oeuvre de chaleur et de pression ledit article plat étant constitué d' :
- un support textile souple et plat, servant de renforcement pour les corps moulés,

ainsi que d' :
- une couche de polymère appliquée sur ledit support et liée à celui-ci, et étant caractérisé en ce que :
- le polymère est un polymère filable,
- le polymère se présente sous la forme de fibres et/ou de filaments ayant un diamètre de 0,5 à 30 $\mu$m,
- les fibres et/ou les filaments sont obtenus par filage-soufflage du polymère filable fondu, à l'aide d'une tête de filage comportant un ou plusieurs canaux de filière, et sont extrudés directement sur le support, la

distance entre la sortie du polymère du canal ou des canaux de filière et le support étant au moins égale à 10 mm, et
- la couche de fibres et/ou de filaments polymères est liée au support, l'effort de séparation mesuré d'après la norme DIN 54310 étant au moins égal à 3 cN/cm.
2/ Article textile plat selon la revendication 1, caractérisé en ce que la polymère filable est un polyamide entièrement aliphatique, un polyester alkylaromatique ou une polyoléfine.
3/ Article plat selon la revendication 2, caractérisé en ce que le polyamide est le nylon 6,6, le polyester est un polytéréphtalate d'alkylène et la polyoléfine est le polypropylène.
4/ Article plat selon la revendication 1, caractérisé en ce que le polymère filable est un polymère thermotrope comprenant dans sa structure des enchaînements polyester.
5/ Article selon la revendication 4, caractérisé en ce que le polymère thermotrope est un polyester totalement aromatique thermotrope ou un polyesteramide totalement aromatique thermotrope.
6/ Article selon la revendication 4 ou 5, caractérisé en ce que le polymère thermotrope possède une température d'écoulement se situant dans l'intervalle allant de 200 °C à 350 °C et présente une viscosité inhérente au moins égale à 0,5 $dlg^{-1}$.
7/ Article plat selon l'une quelconque des revendications 1 à 6, caractérisé en ce que le support textile souple et plat est constitué de tissu, de tricot ou de non tissé.
8/ Article selon la revendication 7, caractérisé en ce que :
- le tissu et le tricot sont constitués de fils à base de filaments, de filés à base de fibres ou de fils à base de filaments et de fibres, et
- le non tissé est constitué de fibres et/ou de filaments.
9/ Procédé de préparation d'un article selon l'une quelconque des revendications 1 à 8, caractérisé en ce que l'on enchaîne les étapes suivantes :
- on produit des fibres et/ou des filaments en utilisant la technique de filage par soufflage d'un polymère filable fondu, à l'aide d'une tête de filage comportant un ou plusieurs canaux de filière,
- et on les extrude directement sur un support textile souple et plat en veillant à ce que la distance entre la sortie du polymère du canal ou des canaux de filière et le support soit au moins égale à 10 mm, pour obtenir une couche de fibres et/ou de filaments qui est liée au support avec un effort de séparation mesuré selon la norme DIN 54310 au moins égal à 3 CN/cm.

Office européen des brevets

# RAPPORT DE RECHERCHE EUROPEENNE

Numéro de la demande

**EP 90 42 0417**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 104 340 (G.R. WARD)<br>* Revendications 9-15; figure 1; colonne 3, ligne 67 - colonne 4, ligne 29; colonne 5, lignes 5-20; exemple *<br>– – – | 1,2,3,7,8, 9 | C 08 J 5/04<br>B 29 B 15/10<br>B 32 B 5/26 |
| Y | | 1-9 | |
| Y | US-A-4 799 985 (P.E. McMAHON et al.)<br>* Revendications 1-4,9-11,17; colonne 3, ligne 52 - colonne 7, ligne 47; colonne 14, ligne 51 - colonne 15, ligne 64 *<br>– – – | 1-9 | |
| D,A | DE-A-1 964 060 (ESSO RESEARCH & ENGINEERING CO.)<br>– – – – – | | |

| DOMAINES TECHNIQUES RECHERCHES (Int. Cl.5) |
|---|
| C 08 J<br>B 29 B |

Le présent rapport de recherche a été établi pour toutes les revendications

| Lieu de la recherche | Date d'achèvement de la recherche | Examinateur |
|---|---|---|
| La Haye | 08 janvier 91 | HALLEMEESCH A.D. |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention

E: document de brevet antérieur, mais publié à la date de dépôt ou après cette date
D: cité dans la demande
L: cité pour d'autres raisons

&: membre de la même famille, document correspondant